# EUROPEAN PATENT APPLICATION

(11) **EP 1 557 761 A1**
(43) Date of publication of application: **27.07.2005**
(21) Application number: 03759008.0
(22) Date of filing: 28.10.2003
(51) Int. Cl.: G06F 12/00

(54) **DATA UPDATE SYSTEM, DIFFERENTIAL DATA CREATING DEVICE AND PROGRAM FOR DATA UPDATE SYSTEM, UPDATED FILE RESTORING DEVICE AND PROGRAM**

(30) Priority: 31.10.2002 JP 2002318391
(71) Applicant: MATSUSHITA ELECTRIC INDUSTRIAL CO., LTD., Kadoma-shi, Osaka 571-8501 (JP)
(72) Inventor: IIDA, Kentarou, Yokohama-shi, Kanagawa 224-0054 (JP); ADACHI, Takanosuke, Yokohama-shi, Kanagawa 224-0054 (JP); TANAKA, Nobuaki, Kawasaki-shi, Kanagawa 221-0051 (JP)
(74) Representative: Grünecker, Kinkeldey, Stockmair & Schwanhäusser Anwaltssozietät
(86) International application number: PCT/JP2003/013793
(87) International publication number: WO 2004/040452

(57) **Abstract**

An object of the invention is to reduce the amount of the differential data for use in data updating in a data updating system. At the time of producing differential data, a Move/Add determining unit (35) determines whether to produce Move data indicating a Move instruction to move and copy a matching data string from a pre-updating file to a post-updating file or Add data indicating an Add instruction to add and copy data. At the time, a matching data string search unit (34) searches for a matching data string between the pre-updating file and the post-updating file. If the length of the data string to be copied is not less than five bytes, the data is output from a Move data output unit (36) as Move data, and if the length is not more than four bytes, the data is output from the Add data output unit (37) as Add data. The Move data and the Add data are combined to produce differential data. The Move size and Move address of the Move data are expressed by a variable bit length. In this way, the amount of differential data can be reduced.

## Description

### Technical Field

The present invention relates to a data updating system for updating one version of data into another version of the data, a device and a program for producing differential data for the data updating system, and a device and a program for restoring a post-updating file.

### Background Art

In a terminal device such as a personal computer, a personal digital assistant (PDA), and a mobile phone that carries out at least part of device operation by the operation of a processor based on a prescribed program, the version of data including a program of interest is updated in order to improve programs, in other words, so-called "version upgrading" is carried out. In the data version updating, data such as software before updating (hereinafter referred to as "pre-updating file") stored in a re-writable storage medium such as a flash ROM and a hard disk is re-written into data such as another version (new version in general) of the software (hereinafter referred to as "post-updating file"). In this case, the pre-updating file may simply be replaced by the post-updating file, while it has been more often the case that the differential data between the pre-updating file and the post-updating file is produced and an post-updating file is produced from the pre-updating file based on the differential data.

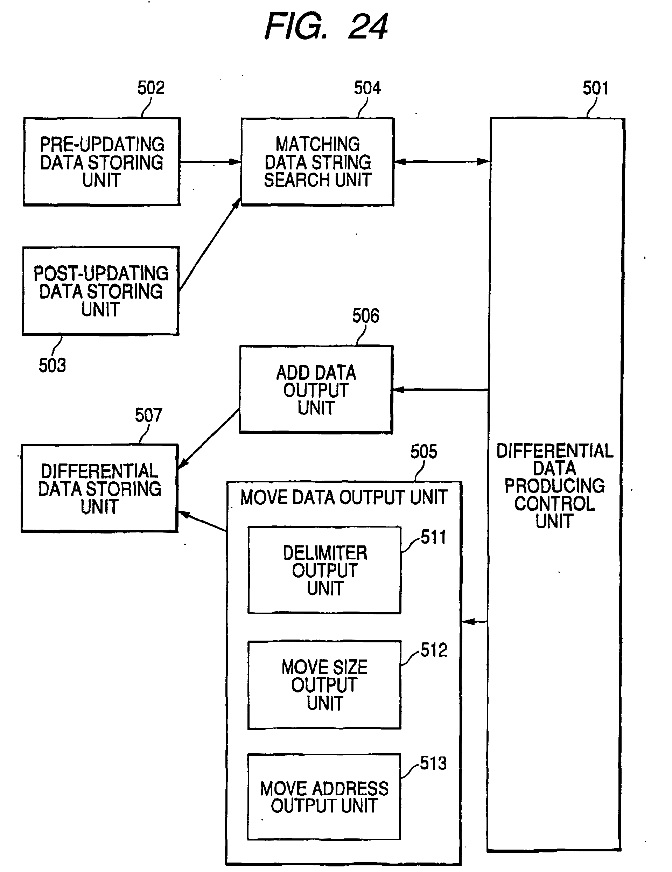

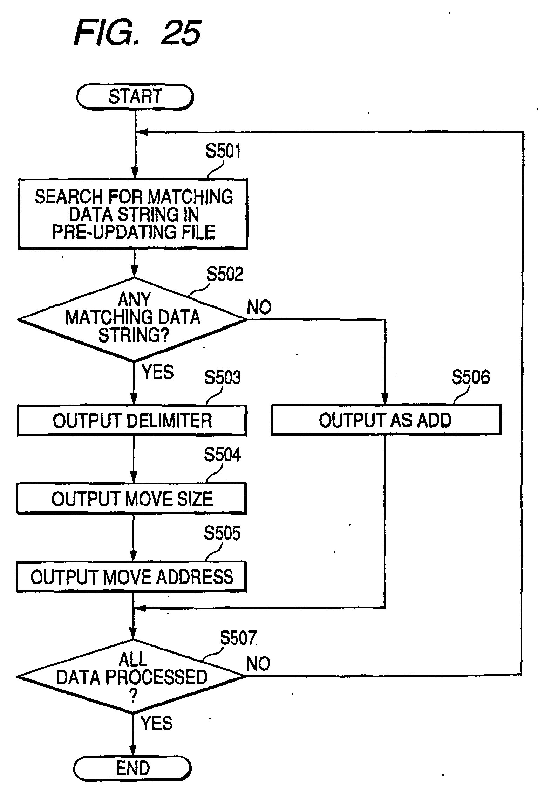

A conventional method of producing differential data will be described with reference to Figs. 24 and 25. Fig. 24 is a functional block diagram of a conventional differential data producing portion. Fig. 25 is a flowchart for use in illustration of a conventional process of producing differential data. In this example, the differential data producing method uses the Block-Move algorithm proposed by Walter F. Tichy. According to the method, pre-updating file data and post-updating file data are compared to search for matching data strings, and the matching data strings are copied and moved as they are as Move data from the pre-updating file to the post-updating file, and for the non-matching data strings, new data strings are added and written as Add data. In this way, the differential data is produced (see non-patent document 1).

The differential data producing portion includes a differential data producing control unit 501 for controlling the steps in the process of producing differential data, a pre-updating data storing unit 502 for storing pre-updating file data, a post-updating data storing unit 503 for storing post-updating file data, and a matching data string search unit 504 for searching matching data strings between the pre-updating file data and the post-updating file data. The differential data producing unit further includes a Move data output unit 505 for outputting matching data strings before and after updating as Move data, an Add data output unit 506 for outputting non-matching data strings before and after updating as Add data, and a differential data storing unit 507 for storing differential data including a combination of Move data and Add data. The Move data output unit 505 includes a delimiter output unit 511 for outputting a separator (delimiter) that separates Add data and Move data, a Move size output unit 512 for outputting the size of Move data, and a Move address output unit 513 for outputting the address of the Move data on the pre-updating and post-updating files.

In this conventional example, the matching data string search unit 504 searches for data strings in the pre-updating file that match data strings in the post-updating file from the beginning of data by referring to data strings in the pre-updating files stored in the pre-updating data storing unit 502 and data strings in post-updating files stored in the post-updating data storing unit 503 (step S501). The process branches depending on whether or not there is any matching data string (step S502), and if there is a matching data string, the Move data output unit 505 carries out the following Move data output process.

As the Move data, the delimiter output unit 511 outputs a delimiter consisting of prescribed data indicating that the following data is Move data (step S503), then the Move size output unit 512 outputs the size of the matching data string as the size of Move data (step S504), and then the Move address output unit 513 outputs the address of the matching string on the pre-updating file and the post-updating file as the address of the Move data (step S505). Using the size of the matching data string and the address, the data string to be copied from the pre-updating file to the post-updating file can be specified.

If there is no matching data found in step S502, the Add data output unit 506 outputs the data string as Add data (step S506). It is then determined whether the processing has been completed to all the data (step S507). If it has not, the process returns to step S501, and the process from step S501 to step S506 is repeated until all the data to the end of the post-updating file is processed. By these process steps, the differential data representing the difference between the pre-updating file and the post-updating file is produced and stored in the differential data storing unit 507.

### Non-patent Document 1

Walter F. Tichy, *"The String-to-String Correction Problem with Block Moves,"* ACM Transactions on Computer Systems, ACM (Association for Computing Machinery), Vol. 2, No. 4, Nov. 1984, pp. 309-321.

Using the differential data between the pre-updating file and the post-updating file in order to update the data in a file including a program or the like, the data capacity necessary for updating can be reduced. At the time, the differential data may be transferred to a terminal device whose data is to be updated, and the post-updating file is restored from the pre-updating file and the differential data in the terminal device, so that the data amount to be transferred at the time of updating can be reduced. The differential data can be produced by the conventional method described above.

When a large amount of data must be changed because of extensive program change, however, even the differential data can be enormous, and the load (traffic) in the communication line such as a network for transferring the differential data increases or the load of an operation circuit for example in a terminal device increases. Consequently, it could take longer to transfer the differential data or re-write into post-updating data or the cost for the communication line can be increased. When the data is updated using a mobile communication system by wireless communication in particular, the amount of the differential data should be reduced because the capacity of the communication line and the memory capacity of the terminal device are limited.

The present invention is directed to a solution to the problems, and it is an object of the invention to provide a data updating system, a device and a program for producing differential data, a device and a program for restoring a post-updating file allowing the amount of the differential data for use in data updating to be reduced.

### Disclosure of the Invention

According to a first aspect of the invention, a data updating system using differential data includes a differential data producing unit having a plurality of versions of data for producing differential data representing the difference between a pre-updating file as one version of data and a post-updating file as another version of the data, a communicating unit for transferring the differential data, and a post-updating file restoring unit for receiving the differential data and restoring the post-updating file based on the already held pre-updating file and the received differential data. The differential data has Move data indicating zero, one, or a plurality of Move instructions to move and copy data from a part or all of the pre-updating file or Add data indicating zero, one, or a plurality of Add instructions to add and copy data in the differential data.

According to a second aspect of the invention, in the structure according to the first aspect, the differential data is made of Add data rather than Move data when the length of the Move data is less than a prescribed threshold.

According to a third aspect of the invention, in the structure according to the first aspect, in the differential data, the Move data has data length information indicating the length of a data string to be copied and address information indicating the location of the data string to be copied, and at least one of the data length information and the address information is made of a variable bit length.

According to a fourth aspect of the invention, in the structure according to the first aspect, in the differential data, the Move data has data length information indicating the length of a data string to be copied and address information indicating the location of the data string to be copied, a relative address for moving the data string is used as the address information, and when the same relative address value is present in a plurality of pieces of Move data, one or more corresponding relative address values are expressed by one or more bits.

According to a fifth aspect of the invention, a differential data producing device in a data updating system producing differential data representing the difference between a pre-updating file as one version of data and a post-updating file as another version of the data, transferring the differential data to another location through the communication unit, and restoring the post-updating file based on the pre-updating file held at the transfer destination and the differential data. The device includes a matching data string search unit for searching the pre-updating file for a data string matching a data string in the post-updating file, a Move/Add determining unit for determining whether to produce Move data indicating a Move instruction to move and copy a matching data string from a part or all of the pre-updating file to the post-updating file or Add data indicating an Add instruction to add and copy a data string in the differential data to the post-updating file as the differential data based on the search result, a Move data output unit for outputting the Move data, and an Add data output unit for outputting the Add data. The differential data has zero, one, or a plurality of pieces of the Move data or zero, one, or a plurality of pieces of the Add data.

According to a sixth aspect of the invention, in the structure according to the fifth aspect, the Move data output unit includes a separator output unit for outputting a separator made of particular data indicating the beginning of the Move data, and data expressing the Move instruction is output following the separator.

According to a seventh aspect of the invention, in the structure according to the fifth aspect, when there is prescribed data used as the separator in the Add data, the Add data output unit outputs particular data after the prescribed data indicating that the prescribed data is not a separator.

According to an eighth aspect of the invention, in the structure according to the fifth aspect, the Move/Add determining unit determines that the matching data string is to be output as Move data from the Move data output unit when the length of the matching data string is at least a prescribed threshold and as Add data from the Add data output unit when the length of the matching data string is less than the prescribed threshold.

According to a ninth aspect of the invention, in the structure according to the eighth aspect, when the device is used for a data updating system that transfers a program and data in a computing system using a 32-bit CPU, the threshold in the Move/Add determining unit is set to five bytes.

According to a tenth aspect of the invention, in the structure according to the eighth aspect, when the differential data between a pre-updating file as one version and a post-updating file as another version is produced, the differential data is produced using a plurality of different thresholds as the threshold in the Move/Add determining unit, and when the differential data having a minimum size is employed.

According to an eleventh aspect of the invention, in the structure according to the fifth aspect, the Move/Add determining unit compares the size of differential data between when the matching data string is expressed by the Move data and when the data string is expressed by the Add data and determines that the data having a smaller size is to be selected.

According to a twelfth aspect of the invention, in the structure according to the fifth aspect, the Move data output unit provides a data length continuation flag made of one or more bits in the beginning byte or word of the Move data, the length of the data string to be copied from the pre-updating file is expressed only by information in the byte or word when the data length continuation flag takes a prescribed state 1, and information expressing the length of the data string continues in one or more bytes or words in or after the byte or word when the data length continuation flag takes a prescribed state 2 different from the state 1.

According to a thirteenth aspect of the invention, in the structure according to the twelfth aspect, the Move data output unit provides a data length continuation flag made of one or more bits in or after the second byte or word of the Move data, the length of the data string to be copied from the pre-updatlng file is expressed by information between the beginning byte or word of the Move data and the byte or word when the data length continuation flag takes the prescribed state 1, and information expressing the length of the data string in one or more bytes or words in and after the byte or word continues when the data length continuation flag takes the prescribed state 2 different from the state 1.

According to a fourteenth aspect of the invention, in the structure according to the fifth aspect, the Move data output unit outputs address information that uses an absolute address in at least one of the pre-updating file and the post-updating file as information indicating a location to which a data string is to be copied from the pre-updating file to the post-updating file in the Move data.

According to a fifteenth aspect of the invention, in the structure according to the fifth aspect, the Move data output unit outputs address information that uses a relative address indicating the difference between the location of a data string in the pre-updating file and the location of the data string in the post-updating file as information indicating a location to which the data string is to be copied from the pre-updating file to the post-updating file.

According to a sixteenth aspect of the invention, in the structure according to the fifth aspect, the Move data output unit and the Add data output unit produce and output Move data and Add data In the order of data strings in the post-updating file, and the Move data output unit outputs address information that uses a relative address indicating the difference between the beginning location of a data string in the pre-updating file and the size of restored data in the post-updating file as information indicating a location to which the data string to be copied from the pre-updating file to the post-updating file is moved.

According to a seventeenth aspect of the invention, in the structure according to the fifteenth or sixteenth aspect, the Move data output unit outputs an address continuation flag made of one or more bits in the beginning byte or word of the data string in the address information by the relative address in the Move data, the Move data output unit expresses the relative address only by the information in the byte or word when the address continuation flag takes a prescribed state 1, and the Move data output unit outputs address information indicating that information that expresses the relative address continues in one or more bytes or words in and after the byte or word when the address continuation flag takes a prescribed state 2 different from the state 1.

According to an eighteenth aspect of the invention, in the structure according to the seventeenth aspect, the Move data output unit provides an address continuation flag made of one or more bits in and after the second byte or word in the data string in the address information by the relative address in the Move data, the Move data output unit expresses the relative address by information between the beginning byte or word of the data string in the address information and the byte or word when the address continuation flag takes the prescribed state 1, and the Move data output unit outputs address information indicating that information that expresses the relative address in one or more bytes or words in and after the byte or word when the address continuation flag takes the prescribed state 2 different from the state 1.

According to a nineteenth aspect of the invention, in the structure according to the fifteenth or sixteenth aspect, the Move data output unit expresses one or more corresponding relative addresses by one or more bits in the beginning byte of word of the Move data when the same relative address appears in a plurality of pieces of Move data in address information in the Move data.

According to a twentieth aspect of the invention, in the structure according to the fifth aspect, as information representing the location of a data string to be copied from the pre-updating file to the post-updating file in the Move data, the Move data output unit outputs address information that uses a relative address indicating the difference between the location of the data string in the pre-updating file and the location of the data string in the post-updating file or the difference between the beginning location of the data string in the pre-updating file and the size of restored data in the post-updating file, an address change flag made of one or more bits is provided in the Move data, the Move data output unit outputs address information by the relative address following data length information indicating the length of the data string when the address change flag takes a prescribed state 1, and the Move data output unit omits information expressing the relative address as the relative address in the previous Move data and the relative address in the present Move data are the same when the address change flag takes a prescribed state 2 different from the state 1.

According to a twenty-first aspect of the invention, in the structure according to any one of the fifteenth, sixteenth, and twentieth aspects, the Move data output unit expresses the relative address in the address information in the Move data by the amount of change from the relative address in the previous Move data.

According to a twenty-second aspect of the invention, a differential data producing program enables a computer to implement the functions of the unit in the differential data producing device in the data updating system according to any one of the fifth to twenty-first aspects.

According to a twenty-third aspect of the invention, a post-updating file restoring device in a data updating system receiving differential data representing the difference between a pre-updating file as one version of data and a post-updating file as another version of the data and restoring the post-updating file based on the pre-updating file held by the device and the differential data include a Move/Add determining unit for determining whether the differential data is Move data representing a Move instruction to move and copy a matching data string from a part or all of the pre-updating file to the post-updating file or Add data representing an Add instruction to add and copy a data string in the differential data to the post-updating file, a Move data restoring unit for outputting a data string corresponding to the Move data, and an Add data restoring unit for outputting a data string corresponding to the Add data. The post-updating file is produced from the differential data.

According to a twenty-fourth aspect of the invention, in the structure according to the twenty-third aspect, in the differential data, the Move/Add determining unit separates data expressing a Move instruction and provided after a separator made of particular data as Move data from data expressing an Add instruction provided between the beginning of the differential data or the end of the previous Move data and the presence of the separator as Add data.

According to a twenty-fifth aspect of the invention, in the structure according to the twenty-fourth aspect, when the separator is present in a data string and data following the separator is particular data in the differential data, the Move/Add determining unit determines the separator as data present in the Add data and used as a separator rather than the separator.

According to a twenty-sixth aspect of the invention, in the structure according to the twenty-third aspect, the Move data restoring unit determines data length information provided in the Move data to determine the length of a data string to be copied from the pre-updatlng file to the post-updating file and detects a data continuation flag made of one or more bits in the beginning byte or word of the Move data, the data Move data restoring unit determines the data length information from information in the byte or word and determines the length of the data string to be copied when the data length continuation flag takes a prescribed state 1, and the Move data restoring unit determines that the data length information continues in one or more bytes or words in and after the byte or word when the length of the data length continuation flag takes a prescribed state 2 different from the state 1.

According to a twenty-seventh aspect of the invention, in the structure according to the twenty-sixth aspect, the Move data restoring unit detects a data length continuation flag made of one or more bits in and after the second byte or word of the Move data, the Move data restoring unit determines data length information from information between the beginning byte or word of the Move data and the byte or word when the data length continuation flag takes the prescribed state 1, and the Move data restoring unit determines that the data length information continues in one or more bytes or words in and after the byte or word when the data length continuation flag takes the prescribed state 2 different from the state 1.

According to a twenty-eighth aspect of the invention, in the structure according to the twenty-third aspect, the Move data restoring unit determines address information provided in the Move data and determines a location to which a data string is to be copied from the pre-updating file to the post-updating file, and the Move data restoring unit determines address information expressed by a relative address representing the difference between the location of the data string in the pre-updating file and the location of the data string in the post-updating file or the difference between the beginning location of the data string in the pre-updating file and the size of restored data in the post-updating file.

According to a twenty-ninth aspect of the invention, in the structure according to the twenty-eighth aspect, the Move data restoring unit detects an address continuation flag made of one or more bits in the beginning byte or word in the data string in address information by the relative address in the Move data, the Move data restoring unit determines the address information of the relative address from information in the byte or word and determines the location of the data string to be copied when the address continuation flag takes the prescribed state 1, and the Move data restoring unit determines that the address information continues in one or more bytes or words in and after the byte or word when the address continuation flag takes the prescribed state 2 different from the state 1.

According to a thirtieth aspect of the invention, in the structure according to the twenty-ninth aspect, the Move data restoring unit detects an address continuation flag made of one or more bits in and after the second byte or word in the data string in the address information by the relative address in the Move data, the Move data restoring unit determines the address information of the relative address from the beginning byte or word of the data string in the address information or information in the byte or word and determines the location of the data string to be copied when the address continuation flag takes the prescribed state 1, and the Move data restoring unit determines that the address information continues in one or more bytes or words in and after the byte or word when the continuation flag takes the prescribed state 2 different from the state 1.

According to a thirty-first aspect of the invention, in the structure according to the twenty-eighth aspect, the Move data restoring unit determines address information expressed by one or more bits in the Move data and determines the location of the data string to be copied. One or more relative address values corresponding to the address information are the same relative address values.

According to a thirty-second aspect of the invention, in the structure according to the twenty-eight aspect, the Move data restoring unit detects an address change flag made of one or more bits in the Move data and determines address information by the relative address provided following data length information representing the length of the data string to be copied, when the address change flag takes a prescribed state 1, and the Move data restoring unit determines the location of the data string to be copied using the same relative address as the relative address in the previous Move data when the address change flag takes a prescribed state 2 different from the state 1.

According to a thirty-third aspect of the invention, a post-updating file restoring program is provided that enables a computer to implement the functions of the unit in the post updating file restoring device in the data updating system in the structure according to any one of the twenty-third to thirty-second aspects.

In the above described structures, setting the threshold based on which whether to produce Move data or Add data is determined at the time of producing differential data, expressing the size and address in the Move data by the variable bit length, and omission of address information when the same address is present in the Move data allow the amount of differential data to be reduced. In this way, the load in the communication line for transferring data and the load and memory consumption in the operation circuit and the like in the device for processing data can be reduced.

### Brief Description of the Drawings

Fig. 1 is a functional block diagram of a data updating system according to an embodiment of the invention;
Fig. 2 schematically shows a method of producing differential data according to an embodiment of the invention;
Fig. 3 schematically shows a method of restoring a post-updating file according to an embodiment of the invention;
Fig. 4 is a diagram showing an example of the format of Move data in differential data for use in the embodiment;
Fig. 5 is a diagram showing examples of the format of the size field in the Move data in Fig. 4;
Fig. 6 is a diagram showing an example of the size field in the Move data in Fig. 4;
Fig. 7 is a diagram showing examples of the format of the address field in the Move data in Fig. 4;
Fig. 8 is a diagram showing an example of the address field in the Move data in Fig. 4;
Fig. 9 is a graph showing a result of producing differential data for sample data by the process of producing differential data according to the embodiment;
Fig. 10 is a functional block diagram of a differential data producing portion in a differential data producing device according to an embodiment of the invention;
Fig. 11 is a functional block diagram of a post-updating file restoring portion in a mobile terminal device according to an embodiment of the invention;
Fig. 12 is a flowchart for use in illustration of the process of producing differential data according to the embodiment;
Fig. 13 is a flowchart for use in illustration of the entire process of producing differential data according to the embodiment;
Fig. 14 is a flowchart for use in illustration of the step of outputting Move data in the process of producing differential data in Fig. 13;
Fig. 15 is a flowchart for use in illustration of the process of outputting the first byte of the Move size in the Move data output processing in Fig. 14;
Fig. 16 is a flowchart for use in illustration of the process of outputting the second byte and on of the Move size in the Move data output processing in Fig. 14;
Fig. 17 is a flowchart for use in illustration of the process of outputting the first byte of the Move address in the Move data output processing in Fig. 14;
Fig. 18 is a flowchart for use in illustration of the process of outputting the second byte and on of the Move address in the Move data output processing in Fig. 14;
Fig. 19 is a flowchart for use in illustration of the process of outputting Add data in producing differential data in Fig. 13;
Fig. 20 is a flowchart for use in illustration of the entire process of restoring a post-updating file according to the embodiment;
Fig. 21 is a flowchart for use in illustration of the process of restoring by Move operation in the post-updating file restoring processing in Fig. 20;
Fig. 22 is a flowchart for use in illustration of the process of determining a Move size in the restoring processing by the Move operation in Fig. 21;
Fig. 23 is a flowchart for use in illustration of the Move address determining process in the restoring processing by the Move operation in Fig. 21;
Fig. 24 is a functional block diagram of a conventional differential data producing portion; and
Fig. 25 is a flowchart for use in illustration of a conventional process of producing differential data.

Note that in the drawings, 11 denotes a differential data producing device, 12 a server, 13 a wireless communication network, 14 a mobile terminal device, 15 a database, 16 a differential data producing portion, 17 a wireless communication portion, 18 a control portion, 19 a post-updating file restoring portion, 20 a data storing portion, 31 a differential data producing control unit, 32 a pre-updating data storing unit, 33 a post-updating data storing unit, 34 a matching data string search unit, 35 a Move/Add determining unit, 36 a Move data output unit, 37 an Add data output unit, 38 a differential data storing unit, 39 a Move address storing unit, 40 a delimiter output unit, 41 a Move size output unit, 42 a Move address output unit, 43 an address change determining unit, 44 an address flag setting unit, 51 a post-updating file restoring control unit, 52 a differential data storing unit, 53 a pre-updating data storing unit, 54 a Move/Add determining unit, 55 a Move data restoring unit, 56 an Add data restoring unit, 57 a post-updating data storing unit, 58 a Move address storing unit, 59 a Move size determining unit, 60 a Move address determining unit, and 61 an address change determining unit.

### Best Mode for Carrying Out the Invention

Now, an embodiment of the invention will be described in conjunction with the accompanying drawings.

According to the embodiment, an example of how to update the version of data including operation programs stored in a mobile terminal device such as a mobile telephone will be described by way of illustrating a data updating system. According to the embodiment, differential data is transferred to the mobile terminal device through the wireless communication network of a mobile communication system, and data in the mobile terminal device can easily be updated through the communication line.

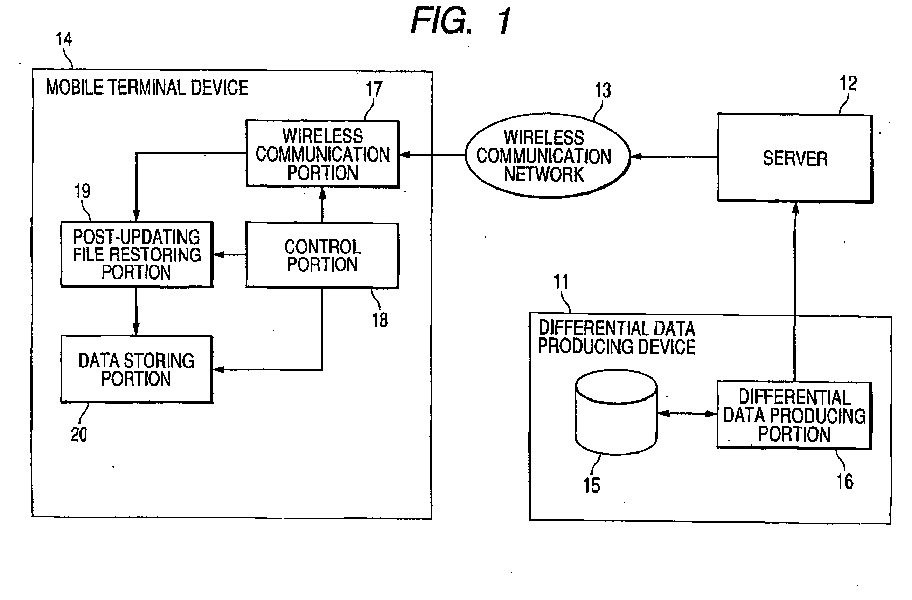

Fig. 1 is a functional block diagram of a data updating system according to an embodiment of the invention. The data updating system includes a differential data producing device 11 serving as a differential data producing unit for producing differential data from a pre-updating file and a post-updating file, a server 12 for transferring the differential data, and a mobile terminal device 14 serving as a post-updating file restoring unit connected to the server 12 through a wireless communication network 13 for restoring a post-updating file from the differential data and the pre-updating file. Note that according to the embodiment, the communication unit includes the server 12, the wireless communication network 13, and the like.

The differential data producing device 11 includes a database 15 that stores a plurality of versions of data to be pre-updating and post-updating files and a differential data producing portion 16 for producing differential data from the pre-updating and post-updating files stored in the database 15 according to the process that will be described. The server 12 is provided to distribute various kinds of data in the mobile communication system and transmits differential data to the mobile terminal device 14 of interest.

The mobile terminal device 14 includes a wireless communication portion 17 that transmits/receives various kinds of data and audio sound signals by wireless communication, a control portion 18 that controls the operation of the elements, a post-updating file restoring portion 19 that restores and produces a post-updating file from the transferred differential data and the pre-updating file according to the process that will be described, and a data storing portion 20 made of a flash ROM storing the post-updating file.

In the data updating system as described above, differential data is produced from a pre-updating file and a post-updating file by the differential data producing device 11, and the differential data is transferred to the mobile terminal device 14 from the server 12 through the wireless communication network 13. The mobile terminal device 14 restores the post-updating file from the differential data thus transferred from the server 12 and the presently stored pre-updating file by the post-updating file restoring portion 19, and the post-updating file is stored in the data storing portion 20. In this way, when the mobile terminal device 14 is in use, the differential data is transferred in an appropriate timing through the wireless communication network 13, so that an operation program or the like can easily have its version updated.

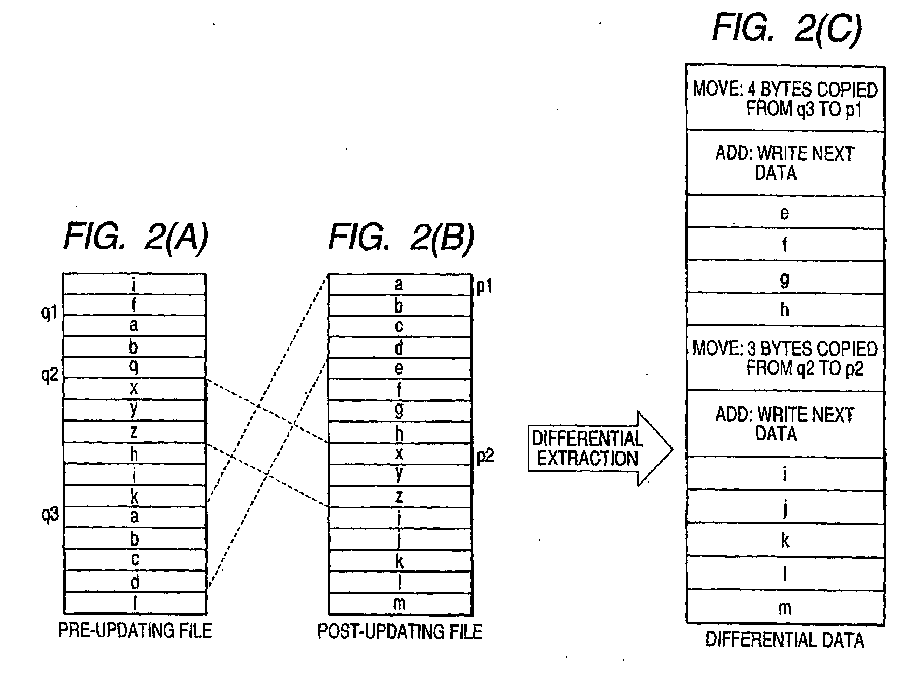

Now, how the differential data is produced and the post-updating file is restored will briefly described. Fig. 2 schematically shows a method of producing differential data according to the embodiment. When the differential data is produced, differential extraction is carried out between the pre-updating file shown in Fig. 2(A) and the post-updating file shown in Fig. 2(B), and differential data as shown in Fig. 2(C) is produced. In this case, a part of the data string in the post-updating file that matches any data string in the pre-updating file is searched for, and for the matching data string if any, Move data represented by the size (data length information) of the matching part to be copied from the pre-updating file and the address (address information) is produced. For the non-matching data strings, Add data for writing the non-matching data strings is produced.

According to the embodiment, the operation of moving (copying) a part of the data string in the pre-updating file and producing a part of the post-updating file is called Move operation, and data that describes the content of the Move operation is called Move data. The operation of adding a data string without referring to the pre-updating file is called Add operation, and data that describes the content of Add operation is called Add data. Differential data includes a combination of Move data and Add data and used as a Move instruction and an Add instruction at the time of restoring a post-updating file. More speciflcally, the differential data consists of Move data representing zero or one or more Move instructions and Add data representing zero or one or more Add instructions.

In the example shown in Fig. 2, Move data for copying four bytes ("a, b, c, d") from the address q3 of the pre-updating file to the address p1 of the post-updating file is produced followed by Add data for writing "e, f, g, h," then Move data for copying three bytes ("x, y, z") from the address q2 of the pre-updating file to the address p2 of the post-updating file, and Add data for writing "i, j, k, l, m."

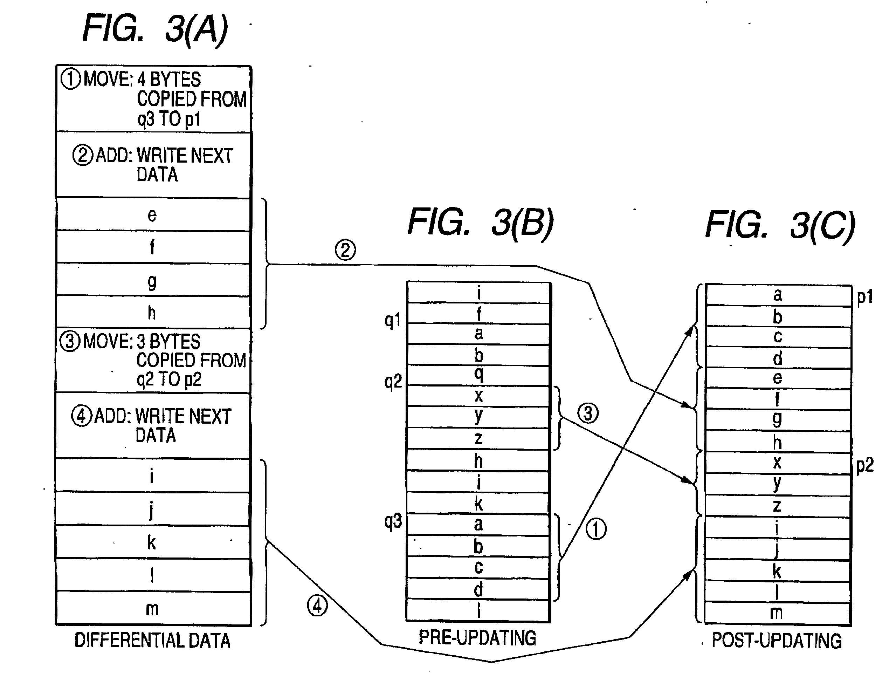

Fig. 3 briefly shows how a post-updating file is restored according to the embodiment. At the time of restoring the post-updating file, the post-updating file shown in Fig. 3(C) is produced from the differential data shown in Fig. 3(A) and the pre-updating file shown in Fig. 3(B). In this case, based on a Move instruction by Move data and an Add instruction by Add data in the differential data, matching data strings are copied from the pre-updating file and moved and the non-matching, new data strings are Written to be added.

In the example shown in Fig. 3, (1) the four bytes ("a, b, c, d") from the address q3 of the pre-updating file are copied to the address p1 of the post-updating file by the Move instruction, then (2) "e, f, g, h," is written by the Add instruction, then (3) the three bytes ("x, y, z,") are copied from the address q2 of the pre-updating file by a Move instruction to the address p2 of the post-updating file, and then (4) "i, j, k, l, m," are written by an Add instruction. In this way, the post-updating file is restored and produced from the pre-updating file using the differential data consisting of the Move data and Add data.

According to the embodiment, the differential data has the following characteristics, so that the amount of the differential data is reduced.
(1) When a matching data string has a length less than a prescribed length, Add data is selected instead of Move data. In this case, although it depends on the size and how many bytes are used to express an address in the Move data, the Move data related to the movement of the small data string may be greater than Add data representing the data itself. According to the embodiment, the threshold is set as five bytes for example, and a data string having a matching part less than the threshold, i.e., not more than four bytes is treated as Add data to produce the differential data in order to reduce the data amount.
(2) In the Move data, the size and address are expressed by variable bit lengths. In this way, a small value can be expressed by a small data amount. Note that at least one of the size and address may be expressed by a variable bit length. According to the embodiment, relative addressing is used, and an address represents the change of the address (relative moving distance) in the post updating file from a base address on the pre-updating file.
(3) When a relative address is used in Move data, and the address is the same as the address (relative moving distance) in the Move data immediately before, the address is omitted. According to the embodiment, differential data is formed so that the data strings in the post-updating file are restored from the start. Therefore, when the address is the same as the address of the Move address immediately before, in other words, when the relative moving distance of the data string to be copied is the same and the string is copied as it is moved parallel, the data may be copied following the data string immediately before. In this way, the same address can be omitted and the data amount can be reduced.

Note that when there are a plurality of identical addresses, a flag or the like may be used to indicate that an address is the same as the previous address or a plurality of often appearing addresses may be expressed by one or more bits in order to reduce the data amount.

As the relative address, a relative address representing the shift between the location of the data string to be copied in the pre-updating file (the beginning and/or end) and the location of the data string in the post-updating file (the beginning and/or end) may be used. In this way, data strings having their locations shifted back and forth or randomly arranged in the post-updating file in a plurality of Move data pieces can be coped with. When Move data and Add data are produced in the order of the data strings in the post-updating file so that the data strings of the post-updating file are restored sequentially from the beginning, a relative address representing the difference between the beginning location of the data strings in the pre-updating file to be copied and the size of restored data in the post-updating file may be used. According to the embodiment, the relative address is used. In this way, the same addresses may be omitted as described above. The relative addressing can express by the shift from the relative address in the previous Move data.

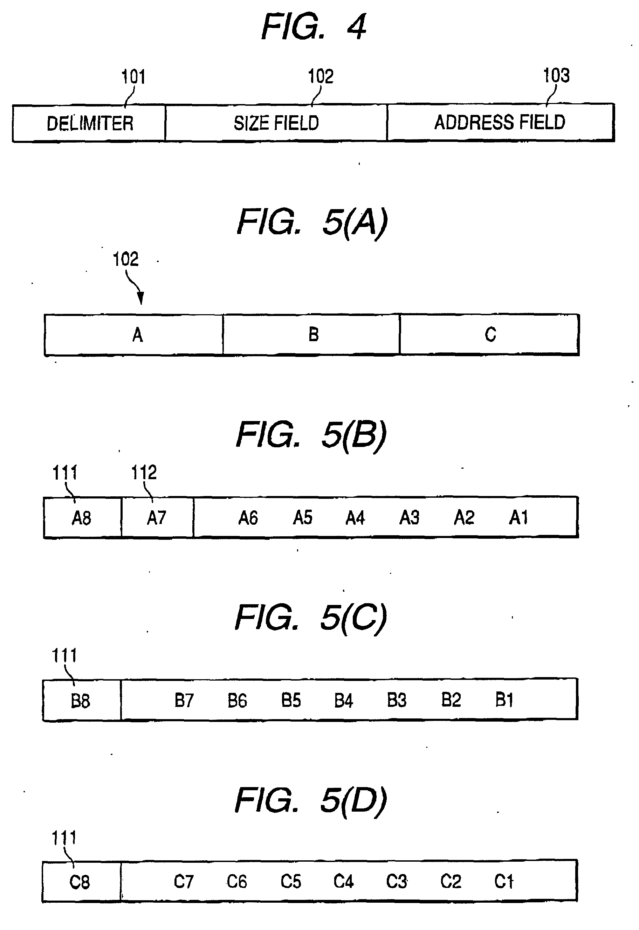

Now, an example of the format of the differential data will be described. As shown in Fig. 4, Move data in the differential data includes three elements, i.e., a delimiter (separator) 101 representing the beginning of the Move data, a size field 102 that stores data length information representing the size of a data string to be copied, and an address field 103 that stores address information representing the relative address of a data string to be copied.

The delimiter 101 has a size of one byte, and uses 0x0F (00001111 in a binary representation). Herein, 0x** represents hexadecimal notation. Note that the delimiter may be represented by a plurality of bytes or one or more bits or words.

The size field 102 is a field having a variable length that stores the size of a data string to be copied (hereinafter also referred to as "Move size") and made of one to three bytes. The three bytes of the size field 102 are represented by A, B, and C, respectively as shown in Fig. 5(A), and the bytes expressed as in Figs, 5(B), 5(C), and 5(D), respectively will be detailed.

In the first byte A shown in Fig. 5(B), the fist bit A8 is a field length flag 111 corresponding to the data length continuation flag, and the second bit A7 is an address change flag 112. The following bits A6 to A1 correspond to the six least significant bits of the Move size. The value of the field length flag 111 of the bit A8 indicates whether the next byte is also a size field. When the bit A8 indicates "1" (the flag is up), the byte is also a size field, but when the bit A8 indicates "0" (the flag is down), only the byte A corresponds to the size field. The value of the address change flag 112 at the bit A7 indicates whether the size filed is followed by an address field. When the bit A7 indicates "1," the size field is followed by an address field. When the bit A7 indicates "0," there is no address field and the address is the same as the address at the Move operation immediately before.

In the second byte B in Fig. 5(C), the first bit B8 is a field length flag 111 corresponding to the data length continuation flag similarly to the byte A. The following bits B7 to B1 correspond to the 13-th to 7-th bits of the Move size. Similarly, in the third byte C shown in Fig. 5(D), the first bit C8 is a field length flag 111, and the following bits C7 to C1 correspond to the 20-ih to 14-th bits of the Move size. The values of the field length flags 111 at the bits B8 and C8 indicate whether the next byte is also a size field. If the value is "1," the next byte is also a size field, and if the value is "0," the size filed ends by the byte.

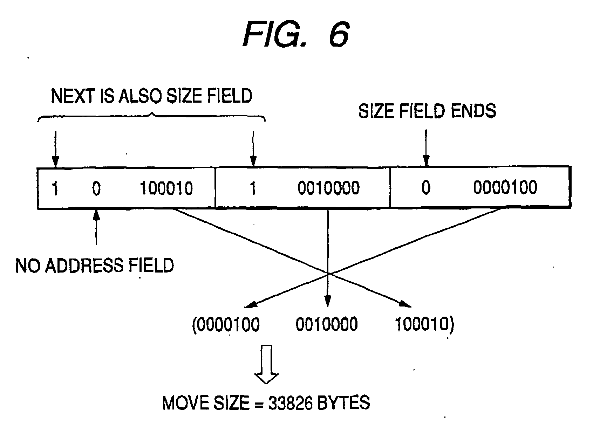

An example of the size field 102 is shown in Fig. 6. In the example shown in Fig. 6, the Move size is represented by three bytes, and the value of the size is 33826 bytes. The address change flag 112 at the second bit is "0," and therefore an address field does not follow. Note that the field length flag 111 or the address change flag 112 may be expressed by a plurality of bits. The values "1" and "0" of the flag may indicate states reversed from the above.

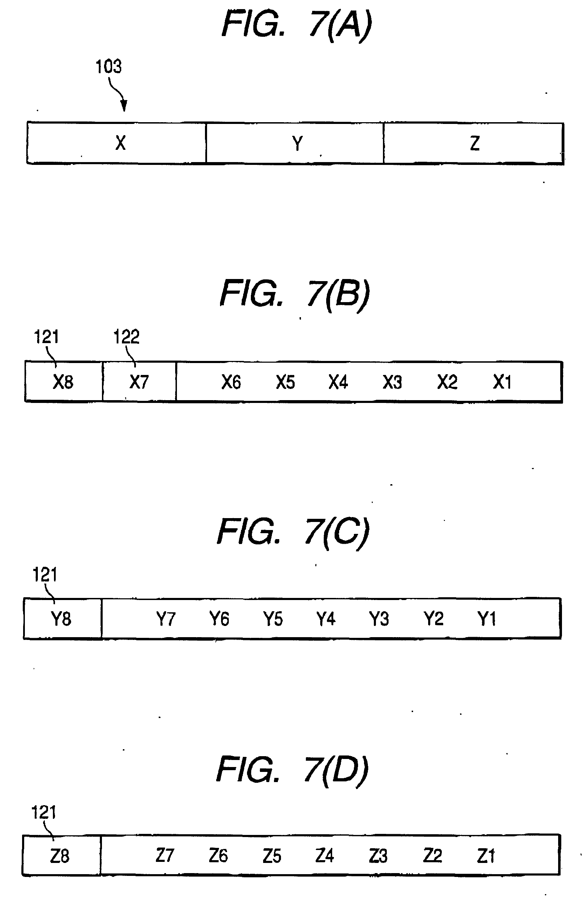

The address field 103 is a variable length field that stores the relative address of a data string to be copied (hereinafter also referred to as "Move address") and includes one to three bytes. The address field 103 is provided when the address change flag 112 of the size field 102 is "1." The three bytes of the address field 103 are represented as X, Y, and Z as shown in Fig. 7(A) and detailed as shown in Figs. 7(B), 7(C), and 7(D), respectively.

In the first byte X shown in Fig. 7(B), the first bit X8 is a field length flag 121 corresponding to the address continuation flag, and the second bit X7 is an address sign bit 122. The following bits X6 to X1 correspond to the six least significant bits of the absolute value of the Move address. The value of the field length flag 121 at the bit X8 indicates whether the next byte is an address field. If the bit X8 is "1," the next byte is also an address field, if the bit is "1," the next byte is also an address field, and if it is "0," only the byte X is an address field. The value of the address sign bit 122 at the bit X7 indicates if the relative address is positive or negative, If the bit X7 is "1," the address is negative, and if the bit is "0," the address is positive.

At the second byte Y shown in Fig. 7(C), the first bit Y8 is a field length flag 121 corresponding to the address continuation flag similarly to the byte X. The following bits Y7 to Y1 correspond to the 13-th to the 7-th bits of the absolute value of the Move address. In the third byte Z shown in Fig. 7(D), the first bit Z8 is also a field length flag 121, and the following bits Z7 to Z1 correspond to the 20-th to 14-th bits of the absolute value of the Move address. The values of the field length flags 121 at the bits Y8 and Z8 also indicate whether the next byte is also an address field. If the value is "1," the next byte is also an address field, and if the value is "0," the address field ends by the byte.

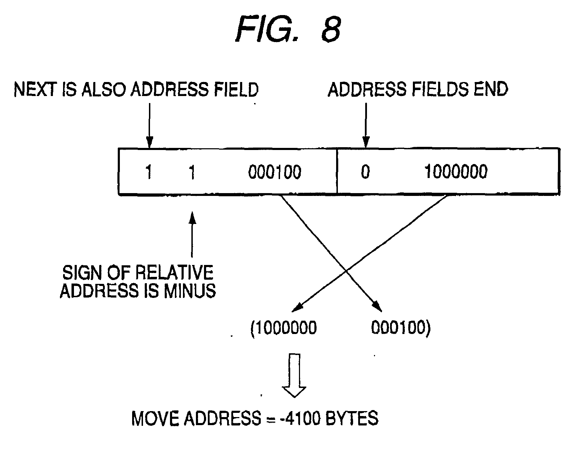

An example of the address field 103 is shown in Fig. 8. In the example in Fig. 8, the Move address is expressed by two bytes, the second bit, i.e., the address sign bit 122 is "1" and this indicates that the sign of the relative address is negative and the value of the address is -4100 bytes. Note that the field length flag 121 may be expressed by a plurality of bits. The values "0" and "1" of the flag may indicate the states reversed from the above.

Meanwhile, for the Add data in the differential data, a data string to be added is principally Add data as it is. Note however that when there is the same 0x0F as the delimiter of the Move data in the original data string, the corresponding Add data is expressed as 2-byte data 0x0F 0x00 to be distinguished from the delimiter.

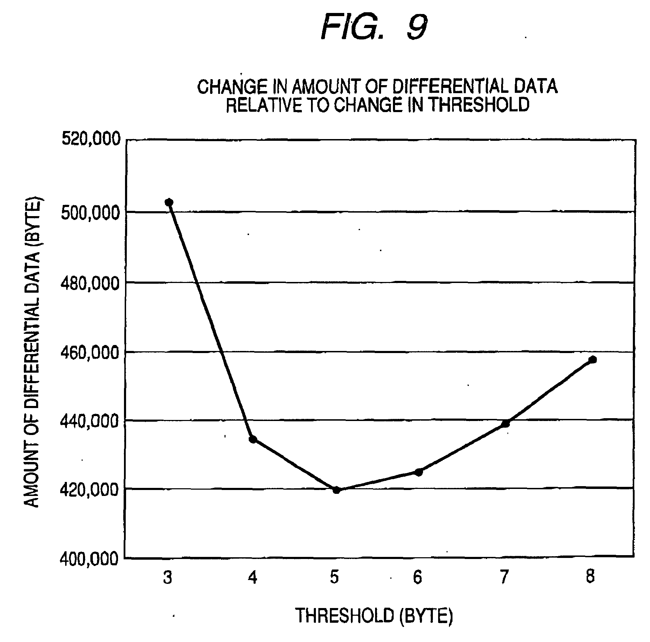

It has been found based on operation using sample data that the amount of differential data can be minimized when the threshold based on which whether to express the data string to be copied as described above as Move data or Add data at the time of transferring a program or data in a computing system using a 32-bit CPU as a processor is five bytes. Fig. 9 is a graph showing differential data produced for sample data by the process of producing differential data according to the embodiment. Fig. 9 shows the transition of the amount of the differential data when the threshold is changed from three to eight bytes, and the data amount is minimized when the threshold is five bytes. When the delimiter is expressed by one byte, the Move size by one to three bytes, and the Move address by one to three bytes as in the above format, the expected value for the Move size is two bytes, the expected value for the Move address is two bytes, and the threshold is preferably also five bytes in order to reduce the amount of the differential data.

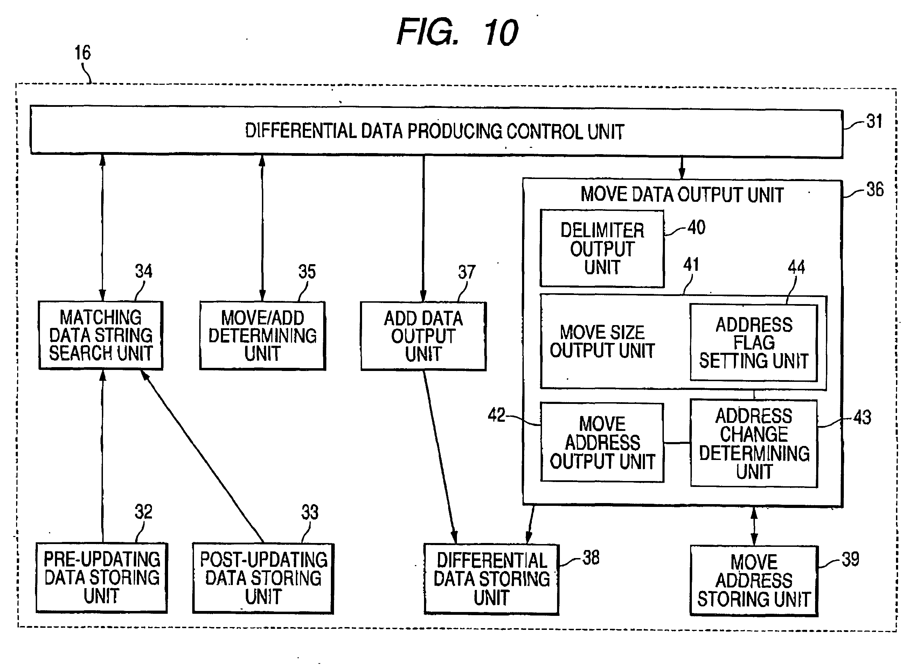

Now, the function and structure of the differential data producing portion and the post-updating file restoring portion will be described. Fig. 10 is a functional block diagram of the differential data producing portion 16 in the differential data producing device 11 shown in Fig. 1. The functions of the various parts of the differential data producing portion 16 are implemented by an operation processing circuit including a processor and a memory and a software program run in the operation processing circuit.

The differential data processing portion 16 includes a differential data producing control unit 31 that controls the process steps for processing differential data, a pre-updating data storing unit 32 for storing pre-updating file data, a post-updating data storing unit 33 for storing post-updating file data, a matching data string search unit 34 for searching a matching data string between a pre-updating file and a post-updating file, and a Move/Add determining unit 35 for determining which data to produce between Move data and Add data. The data producing portion further includes a Move data output unit 36 for producing Move data based on a result from the Move/Add determining unit 35 and outputting the data, an Add data output unit 37 for producing Add data and outputting the data, and a differential data storing unit 38 for storing differential data including a combination of Move data and Add data.

The data producing portion further includes a Move address storing unit 39 for storing the present Move address at the time of producing and outputting Move data. The Move data output unit 36 includes a delimiter output unit (a separator output unit) 40 for outputting a delimiter provided at the beginning of Move data in order to indicate a boundary between Add data and Move data, a Move size output unit 41 for outputting the size of Move data to be copied, a Move address output unit 42 for outputting a relative address on a post-updating file to which Move data is to be copied, an address change determining unit 43 for determining whether Move address has changed based on an address stored in the Move address storing unit 39 and an address output from the Move address output unit 42, and an address flag setting unit 44 for setting an address change flag based on a result from the address change determining unit 43. The functions of the differential data producing portion 16 will be detailed in connection with the following description of the differential data producing process.

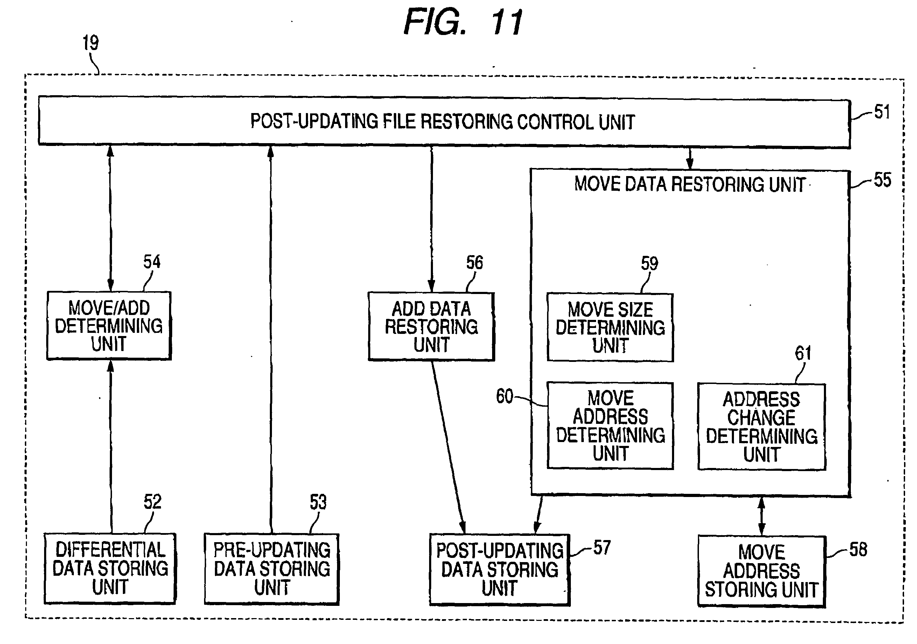

Fig. 11 is a functional block diagram of the post-updating file restoring portion 19 in the mobile terminal device 14 in Fig. 1. The functions of the elements of the post-updating file restoring portion 19 are implemented by an operation processing circuit including a processor and a memory and a software program run in the operation processing circuit.

The post-updating file restoring portion 19 includes a post-updating file restoring control unit 51 that controls the process steps for restoring a post-updating file, a differential data storing unit 52 for storing transferred differential data, a pre-updating data storing unit 53 for storing pre-updating file data, and a Move/Add determining unit 54 for determining whether a part of interest in differential data belongs to Move data or Add data. The post-updating file restoring portion further includes a Move data restoring unit 55 for copying a data string corresponding to Move data from a pre-updating file based on a result from the Move/Add determining unit 54 and outputting the data, an Add data restoring unit 56 for outputting a data string corresponding to Add data, and a post-updating data storing unit 57 for storing post-updating file data restored from the Move data and the Add data.

The post-updating file restoring portion further includes a Move address storing unit 58 for storing the present Move address when post-updating file data is restored by Move operation. The Move data restoring unit 55 includes a Move size determining unit 59 for determining the size of Move data to be copied, a Move address determining unit 60 for determining a relative address on a post-updating file to which data is to be copied, and an address change determining unit 61 for determining whether there is change in a Move address based on an address change flag in Move data. The functions of the post-updating file restoring portion 19 will be detailed in connection with the following description of the operation of restoring a post-updating file.

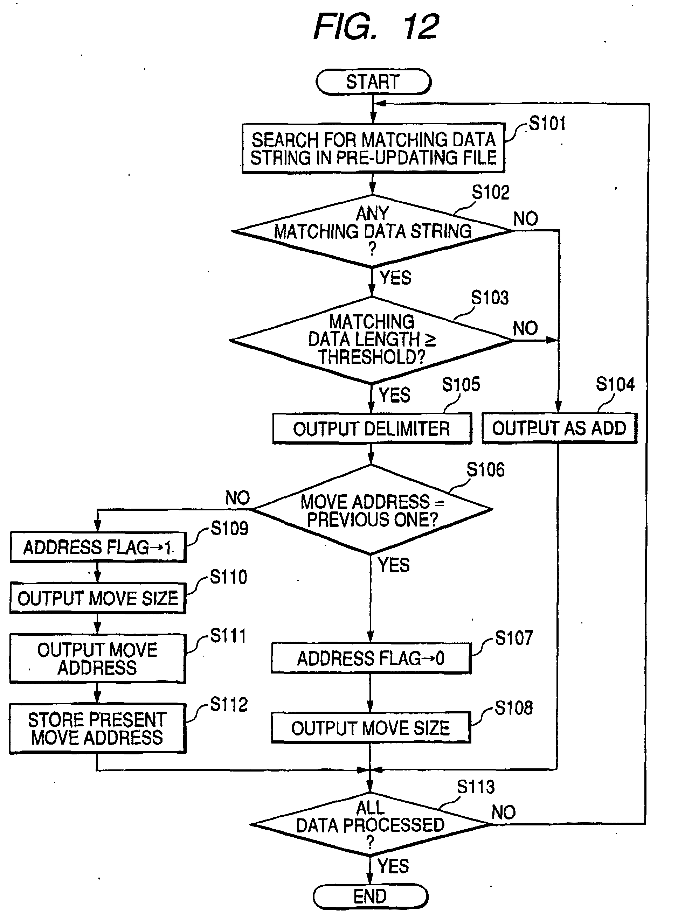

The process of producing differential data in the differential data producing portion 16 according to the embodiment will be described. How differential data is produced will be briefly described with reference to Fig. 12. Fig. 12 is a flowchart for use in illustration of the process of producing differential data according to the embodiment. Differential data is produced on the basis of a prescribed size block according to the erasure or writing unit of for example a flash ROM that stores a pre-updating file and a post-updating file in the mobile terminal device 14.

The differential data producing portion 16 refers to data strings in a pre-updating file stored in the pre-updating data storing unit 32 and a post-updating file stored in the post-updating data storing unit 33 by the matching data string search unit 34 and searches the pre-updating file from the beginning for a data string matching a data string in the post-updating file (step S101). The Move/Add determining unit 35 determines whether to produce Move data or Add data based on a search result from the matching data string search unit 34. Here, it is determined whether there is a matching data string (step S102), and if there is a matching data string, it is determined whether the data length of the matching data string is not less than a threshold value (step S103). According to the embodiment, if the data length of the matching data string is for example five bytes or more, the data string is output as Move data, and if the data length is not more than four bytes, the data string is output as Add data.

If no matching data string is found in step S102 or the data length is less than the threshold in step S103, the data string is output as Add data by the Add data output unit 37 (step S104).

Meanwhile, if the data length is not less than the threshold in step S103, the Move data output unit 36 carries out the following Move data output process. In this case, the delimiter output unit 40 outputs a delimiter made of prescribed data (0x0F) indicating that the following data is Move data (step S105), and then the address change determining unit 43 refers to addresses stored in the Move address storing unit 39 to determine whether the Move address is the same as the previous one (step S106). If the Move address is the same as the previous one, the address change flag is set to "0" by the address flag setting unit 44 (step S107) and the size of the matching data string is output as a Move size by the Move size output unit 41 (step S108).

When the Move address is different from the previous address in step S106, the address change flag is set to "1" by the address flag setting unit 44 (step S109) and the size of the matching data string is output as a Move size by the Move size output unit 41 (step S110). Then, a relative address on a post-updating file to which the Move data is to be copied is output by the Move address output unit 42 (step S111). At the time, the present Move address is stored in the Move address storing unit 39 (step S112).

Then, it is determined whether all the data has been processed (step S113), and if all the data has not been processed, the process returns to step S101 and the process from steps S101 to S112 is repeated until all the data up to the end of the post-updating file Is processed similarly to the above. By the above described process, differential data representing the difference from the pre-updating file including a combination of Move data and Add data is produced and stored in the differential data storing unit 38.

Now, the process of producing the differential data as described above will be detailed. In the following embodiment, the process of how differential data in the format shown in Figs. 4 to 8 Is produced will be described.

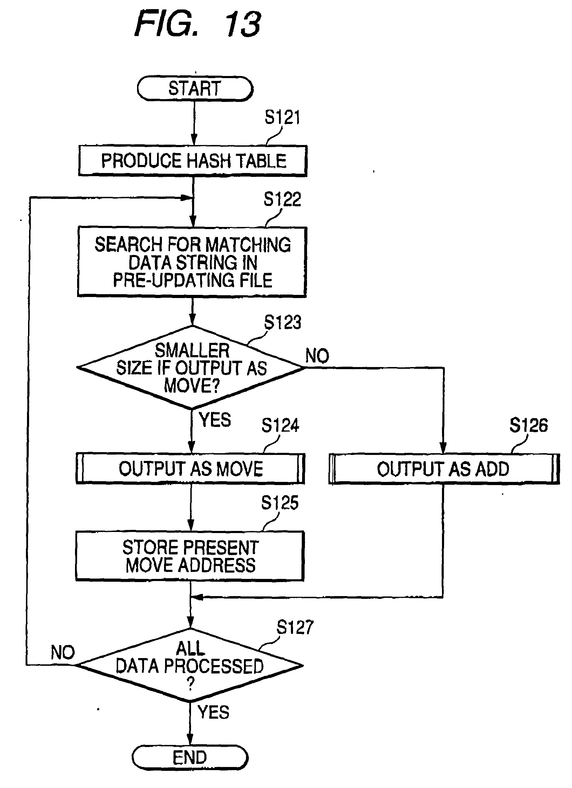

Fig. 13 is a flowchart for use in illustration of the entire process of producing differential data according to the embodiment. In order to find a data string in a post-updating file that matches one in a pre-updating file, a hash table is produced for each of the data strings in the pre-updating file and the post-updating file (step S121). Using the hash tables, the pre-updating file is searched for data strings that match data strings in the post-updating file (step S122). In this example, the matching data string search unit 34 searches for data strings using indexes based on known hash values and compares pre-updating data strings and post-updating data strings. By the search processing, the location and length of a matching data string is obtained. The use of the hash values for searching for matching data strings in this way allows the search processing to be carried out at high speed.

Then, by referring to the data length of the matching data string, the data length is compared to five bytes as the threshold, and it is determined whether the data has a smaller size when it is output as Move data (step S123). If the data length is not less than five bytes, it is assumed that the data has a smaller size as Move data and the process of outputting the data as Move data is carried out (step S124), and the present Move address is stored (step S125). Meanwhile, if the data length is not more than four bytes, it is assumed that the data is greater in size as it is output as Move data, and the process of outputting the data as Add data Is carried out (step S126). It is then determined whether or not all the data has been processed (step S127). If not all the data has been processed, the process returns to step S122, and the process from steps S122 to S126 is repeated until all the data is processed.

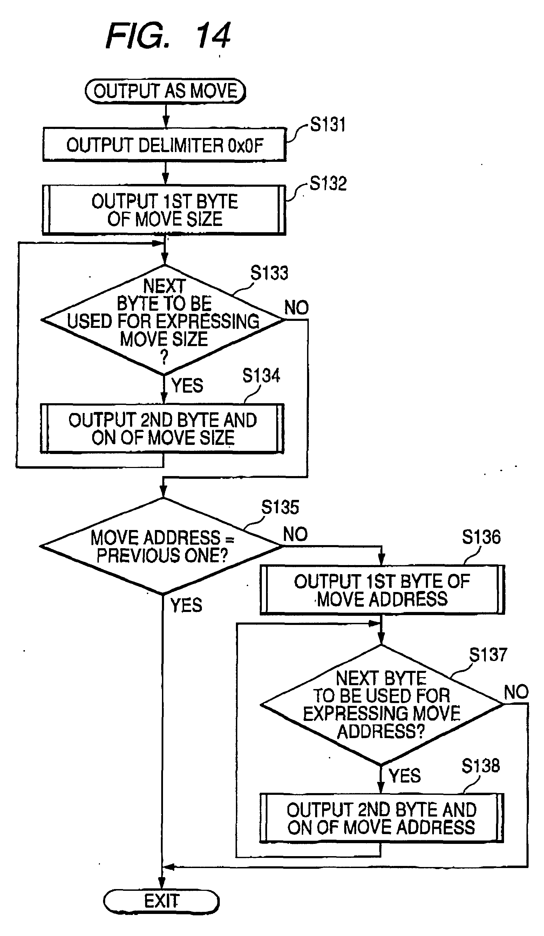

Fig. 14 is a flowchart for use in illustration of the process of outputting the data as Move data In step S124 in Fig. 13. In this process, a delimiter (0x0F) indicating that the following data string is Move data is output (step S131). Then, the process of outputting the first byte of the Move size for the matching data string is carried out (step S132). It is then determined whether or not the next byte is to be used to express the Move size (step S133), and if the next byte is to be used in that manner, the process of outputting the second byte and on of the Move size is carried out (step S134). The process from steps S133 and S134 is repeated.

When the next byte is not used to express the Move size based on the result in step S133, it is determined whether the Move address is the same as the previous address (step S135). Here, if the Move address is different from the previous address, the process of outputting the first byte of the Move address for the matching data string is carried out (step S136). It is then determined whether the next byte is to be used to express the Move address (step S137), and if the next byte is to be used in that manner, the process of outputting the second byte and on of the Move address is carried out (step S138). Then, the process In steps S137 and S138 is repeated.

If the Move address is the same as the previous address based on the result in step S135 and if the next byte is not to be used to express the Move address based on the result in step S137, the process exits the Move data output processing and proceeds to step S125 in Fig. 13.

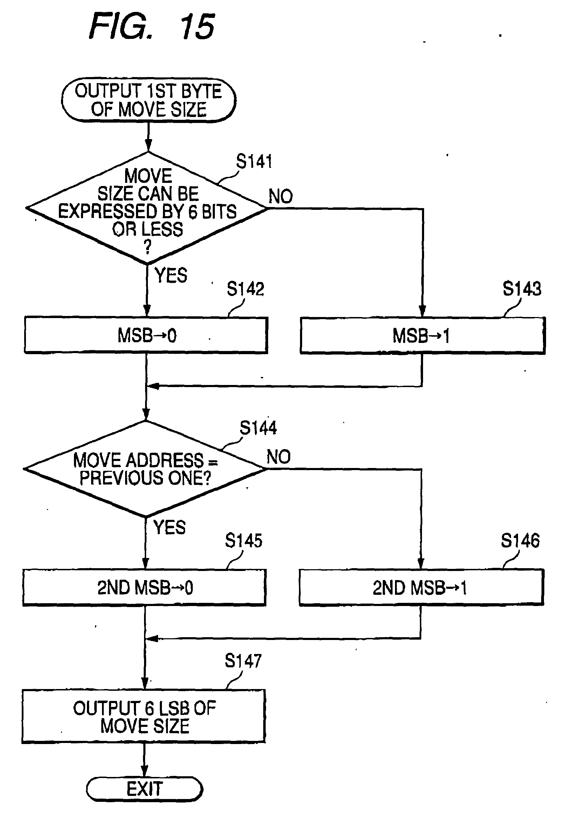

Fig. 15 is a flowchart for use in illustration of the process of outputting the first byte of the Move size In step S132 in Fig. 14. In the process, it is determined whether the Move size can be expressed by six bits or less (step S141). If the size can be expressed by six bits or less, the most significant bit, i.e., the field length flag in the first byte of the size field Is set to "0" (step S142). If the size cannot be expressed by six bits or less, the most significant bit is set to "1" (step S143). It is then determined whether the Move address is the same as the previous address (step S144). If the Move address is the same as the previous address, the second most significant bit, i.e., the address change flag of the size field is set to "0" (step S145). If the Move address is different from the previous address, the second most significant bit is set to "1" (step S146). Then, the six least significant bits of the Move size are output (step S147). The process exits the process of outputting the first byte of the Move size and proceeds to step S133 in Fig. 14.

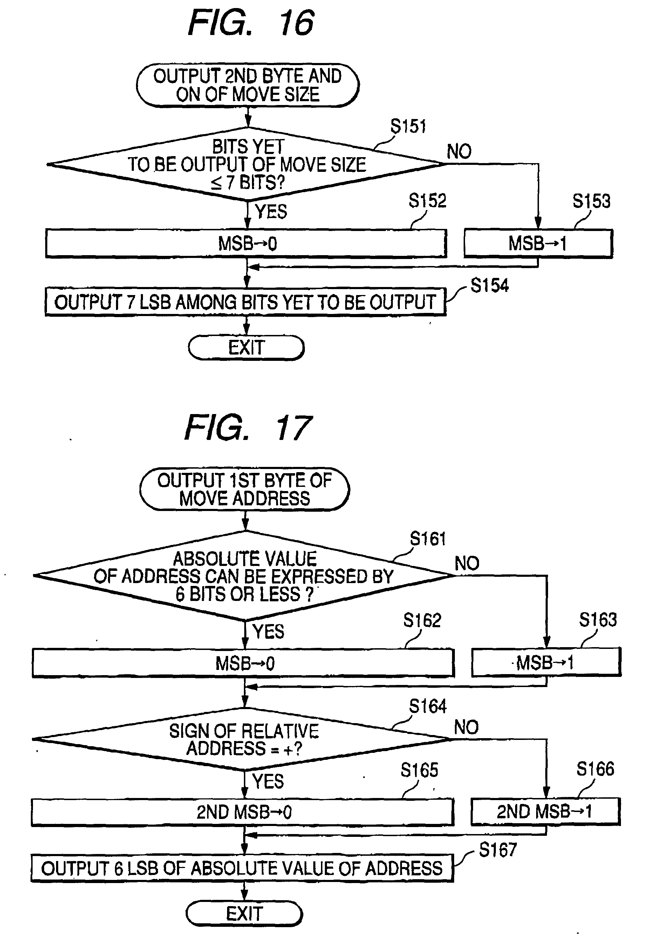

Fig. 16 is a flowchart for use in illustration of the process of outputting the second byte and on of the Move size in step S134 in Fig. 14. In the process, it is determined whether the number of bits yet to be output of the Move size is seven or less (step S151). If the number of bits yet to be output is seven or less, the most significant bit, i.e., the field length flag of the byte in the size field is set to "0" (step S152). If the number of bits yet to be output is greater than seven, the most significant bit is set to "1" (step S153). Then, the seven least significant bits among the bits yet to be output of the Move size are output (step S154). Then, the process exits the process of outputting the second byte and on of the Move size and proceeds to step S133 in Fig. 14.

Fig. 17 is a flowchart for use in illustration of the process of outputting the first byte of the Move address in step S136 in Fig. 14. In the process, it is determined whether the absolute value of the Move address can be expressed by six bits or less (step S161). If the value can be expressed by six bits or less, the most significant bit, i.e., the field length flag of the first byte In the address field is set to "0" (step S162). If it cannot be expressed by six bits or less, the most significant bit is set to "1" (step S163). It is then determined whether the sign of the relative address is positive or negative (step S164). If the sign of the relative address is positive, the second most significant bit, i.e., the address sign bit of the address field is set to "0" (step S165), If the sign of the relative address is negative, the second most significant bit is set to "1" (step S166). Then, the six least significant bits of the absolute value of the Move address are output (step S167). The process then exits the process of outputting the first byte of the Move address and proceeds to step S137 in Fig. 14.

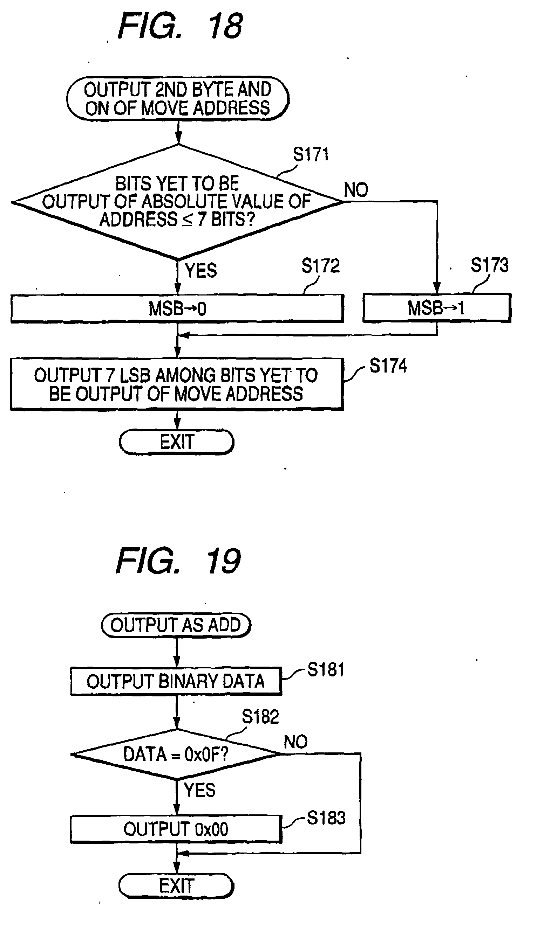

Fig. 18 is a flowchart for use in illustration of the process of outputting the second byte and on of the Move address in step S138 in Fig. 14. In the process, it is determined whether or not the number of bits yet to be output of the absolute value of the Move address is seven or less (step S171). If the number of bits yet to be output is seven or less, the most significant bit, i.e., the field length flag of the byte in the address field is set to "0" (step S172). If the number of bits yet to be output is larger than seven, the most significant bit is set to "1" (step S173). Then, the seven least significant bits of the bits yet to be output of the Move address are output (step S174). The process then exits the process of outputting the second byte and on of the Move address and proceeds to step S137 in Fig. 14.

Fig. 19 is a flowchart for use in illustration of the process of outputting data as Add data in step S126 in Fig. 13. In the process, binary data is output for the data strings in the post-updating file that do not match pre-updating file and matching data strings equal to or smaller than four bytes (step S181). It is then determined whether the output data is the same 0x0F as the delimiter (step S182). If the output data is not 0x0F, the Add data output processing ends. If the output data is 0x0F, 0x00 is output next (step S183), and then the Add data output processing ends. When the Add data output processing ends, the process proceeds to step S127 in Fig. 13.

The differential data having the combination of Move data and Add data produced as described above is stored in the differential data storing unit 38. The differential data is then attached with a header, a CRC and the like, compressed if necessary, and produced into a differential file, which is transferred from the differential data producing device 11 to the server 12. The differential file is transferred from the server 12 to the mobile terminal device 14 through the wireless communication network 13, and a post-updating file is produced from the pre-updating file and the differential data at the post-updating file restoring portion 19 of the mobile terminal device 14. In this way, data is updated.

As described above, by the differential data producing device and method according to the embodiment, setting the threshold based on which whether to produce Move data or Add data is determined at the time of producing differential data and expressing the size and address in the Move data by the variable bit length allow the amount of differential data to be reduced. In this way, the load in the communication line for transferring data and the load and memory consumption in the operation circuit and the like in the device for processing data can be reduced.

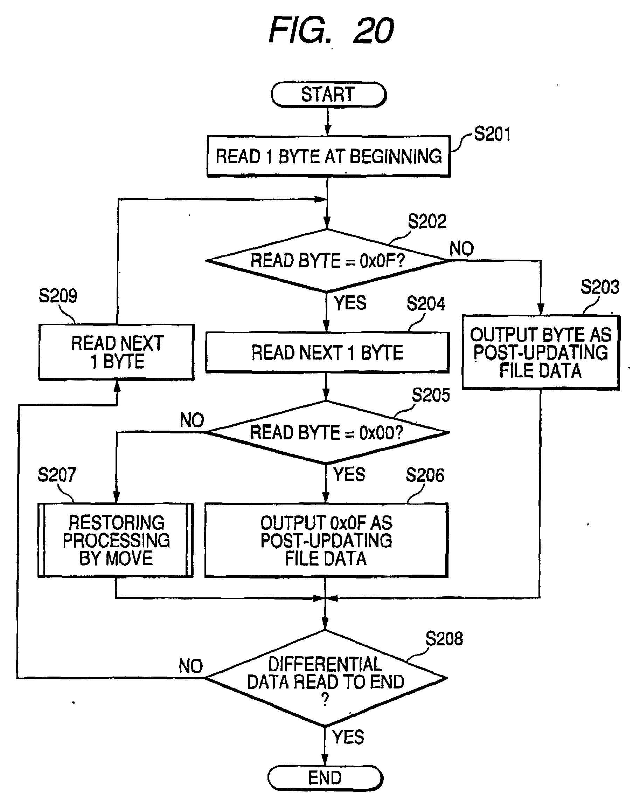

Now, the operation process of how a post-updating file is restored in the mobile terminal device 14 according to the embodiment will be described. Fig. 20 is a flowchart for use in illustration of the entire process of restoring a post-updating file according to the embodiment.

The post-updating file restoring portion 19 reads one byte at the beginning of the differential data stored in the differential data storing unit 52 by the Move/Add determining unit 54 (step S201) and determines whether the read byte is the same 0x0F as the delimiter (step S202). If the byte is not 0x0F, the byte is determined as a part of Add data and therefore output from the Add data restoring unit 56 as post-updating file data (step S203).

If the byte read in step S202 is 0x0F, the next one byte is read (step S204), and it is determined whether the read byte is 0x00 (step S205). If the byte is 0x00. the byte immediately before the byte is determined as a part of Add data rather than a delimiter, and therefore 0x0F is output as post-updating file data from the Add data restoring unit 56 (step S206). If the byte read in step S204 is not 00x0, the byte 0x0F immediately before the byte is determined as a delimiter indicating the beginning of Move data, and therefore subsequent data is subjected to Move operation for the restoring process by the Move data restoring unit 55 (step S207).

It is then determined whether the differential data has been read to the end (step S208), and if the differential data has not been read to the end, the next one byte is read (step S209), and the process returns to step S202 and the process from steps S202 to S208 is repeated until all the data to the end of the differential data is processed similarly to the above case. By the above described process, the post-updating file is restored and produced from the differential data and the pre-updating file data by Move operation and Add operation and stored in the post-updating data storing unit 57.

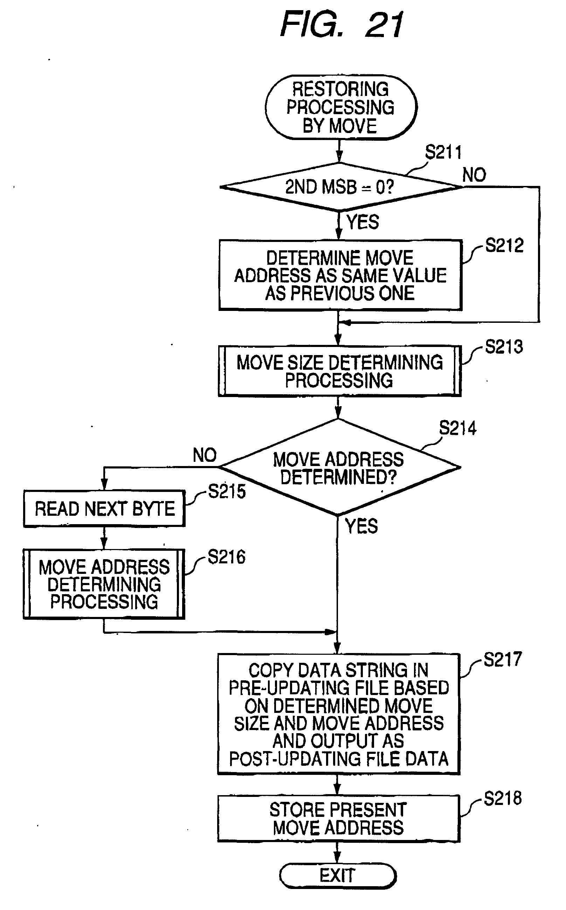

Fig. 21 is a flowchart for use in illustration of the restoring process by Move operation in step S207 in Fig. 20. In the process, it is determined by the address change determining unit 61 in the Move data restoring unit 55 whether the second most significant bit of Move data, i.e., the address change flag of the size field is "0" (step S211). If the address change flag indicates "0," the Move address stored in the Move address storing unit 58 is read out by the Move address determining unit 60, and the Move address is set to the same value as the previous one (step S212). Then, the process of determining the Move size is carried out by the Move size determining unit 59 (step S213). If the address change flag indicates "1," the process proceeds to the Move size determining process in step S213 without determining the Move address.

It is then determined by the Move address determining unit 60 whether the Move address has been determined (step S214), and if the Move address has not yet been determined, the next byte is read (step S215). The Move address determining unit 60 carries out the process of determining the Move address (step S216).

If it is determined based on the result in step S214 that the Move address has been determined or after the process of determining the Move address in step S216, the data string in the pre-updating file is copied based on the determined Move size and the Move address and output from the Move data restoring unit 55 as post-updating file data (step S217). The present Move address is stored in the Move address storing unit 58 (step S218). The process exits the Move operation restoring processing and proceeds to step S208 in Fig. 20.

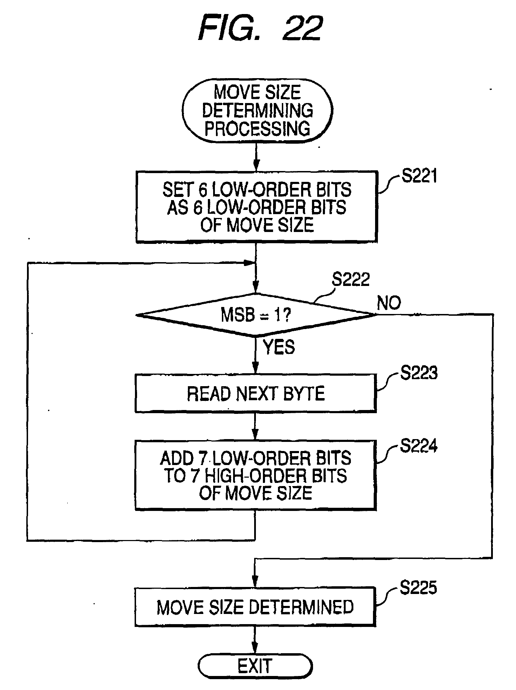

Fig. 22 is a flowchart for use in illustration of the process of determining the Move size in step S213 in Fig. 21. In the process, for the first byte of the Move data, the six low-order bits are set as the six low-order bits of the Move size (step S221). It is then determined whether the most significant bit of the byte, i.e., the field length flag at the first byte of the size field indicates "1" (step S222). When the field length flag indicates "1," the next byte is read (step S223), and the seven low-order bits of the byte are added to the seven high-order bits of the Move size (step S224).

The process then returns to step S222, and it is determined for the second byte and on whether the most significant bit, i.e., the field length flag of the byte In the size field indicates "1," and if the field length flag indicates "1," the process in steps S223 and S224 is carried out.

If the most significant bit of the byte indicates "0," it means that there is no size field in the following byte, and therefore the Move size is determined based on the Move data up to the point (step S225). The process exits the Move size determining processing and proceeds to step S214 in Fig. 21.

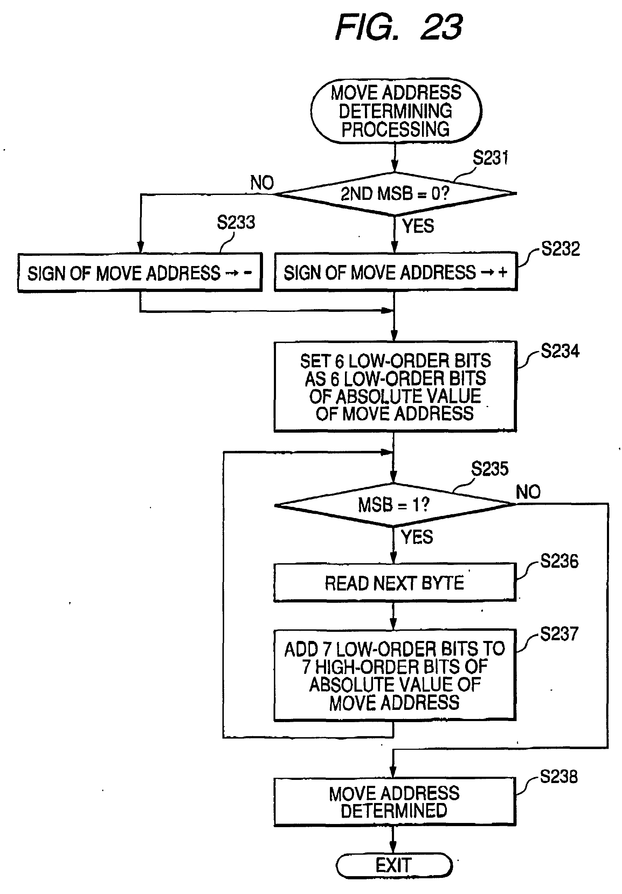

Fig. 23 is a flowchart for use In illustration of the Move address determining process in step S216 in Fig. 21. In the process, for the first byte of the address field of the Move data, it is determined whether the second most significant bit, i.e., the address sign bit of the address field indicates "0" (step S231). If the address sign bit is "0," the sign of the Move address is set to positive (step S232). If the address sign bit is "1," the sign of the Move address is set to negative (step S233). Then, the six low-order bits of the byte are set as the six low-order bits of the absolute value of the Move address (step S234).

Then, it is determined whether the most significant bit of the byte, i.e., the field length flag in the first byte of the address field indicates "1" (step S235). If the field length flag indicates "1," the next byte is read (step S236), and the seven low-order bits of the byte are added to the seven high-order bits of the absolute value of the Move address (step S237).

Then, the process returns to step S235 and for the second byte and on, it is determined whether the most significant bit of the byte, i.e., the field length flag of the byte in the address field indicates "1," and if the field length flag indicates "1," the process in steps S236 and S237 is carried out similarly to the above described case.

If the most significant bit of the byte indicates "0," it means that the address field does not continue in the following byte, and therefore the Move address is determined based on the Move data up to the point (step S238). The process exits Move address determining processing and proceeds to step S217 in Fig. 21.

The post-updating file data thus restored and produced is stored in the post updating data storing unit 57. Then, the post-updating file is written and stored in the data storing portion 20 such as a flash ROM and the file replaces the pre-updating file.

In this way, by the post-updating file restoring device and method according to the embodiment, the post-updating file may be produced from a reduced amount of differential data and the pre-updating file held by the device, and therefore data can easily be updated simply by transferring a small amount of differential data for updating. The load and memory consumption in the operation circuit or the like in the device for processing data can be reduced.

According to the embodiment, the threshold based on which whether to express a data string to be copied by Move data or Add data is set to five bytes in advance for producing differential data. However, the embodiment is not limited to this. When the differential data between one version of a pre-updating file and another version of a post-updating file is produced, a plurality of different thresholds may be used to carry out the differential data producing process and differential data whose size is minimized may be employed.

When it is determined whether to express a data string to be copied by Move data or Add data, for a matching data string between a pre-updating file and a post-updating file, the data size may be compared between when the data is expressed by Move data and when the data is expressed by Add data, so that the data having a smaller size may be selected.

The address information of the Move address in the Move data of the differential data is expressed by the relative address, while the absolute address of at least one of the pre-updating file and the post-updating file may be employed.

The data such as the Move data is expressed by bytes, but the invention is applicable when the data is expressed by words.

Although the present invention has been described in detail with reference to specific embodiments, it would clearly be understood by a person skilled in the art that the invention may be subjected to various modifications and corrections without departing from the sprits and gist of the invention.

The present invention is based on Japanese Patent Application No. 2002-318391, filed on October 31, 2002, the contents of which are herein incorporated by reference.

### Industrial Applicability

As in the foregoing, according to the invention, in a data updating system for updating one version of data into another version of the data, the amount of differential data used for data updating can be reduced.

## Claims

1. A data updating system using differential data, comprising:
a differential data producing unit which has a plurality of versions of data for producing the differential data representing the difference between a pre-updating file as one version of data and a post-updating file as another version of the data;
a communicating unit which transfers the differential data; and
a post-updating file restoring unit which receives the differential data, and restores the post-updating file based on the already stored pre-updating file and the received differential data,
wherein the differential data includes Move data indicating zero, one, or a plurality of Move instructions to move and copy data from a part or all of the pre-updating file and Add data indicating zero, one, or a plurality of Add instructions to add and copy data in the differential data.

2. The data updating system according to claim 1, wherein the differential data is made of the Add data instead of the Move data when the length of the Move data Is smaller than a prescribed threshold.

3. The data updating system according to claim 1, wherein in the differential data, the Move data has data length information indicating the length of a data string to be copied and address information indicating the location of the data string to be copied; and
wherein at least one of the data length informatlon and the address information is made of a variable bit length.

4. The data updating system according to claim 1, wherein in the differential data, the Move data has data length information indicating the length of a data string to be copied and address information indicating the location of the data string to be copied, a relative address for moving the data string being used as the address information, and
wherein when the same relative address value appears in a plurality of pieces of Move data, the one or more relative address values are expressed by one or more bits.

5. A differential data producing device in a data updating system for producing differential data representing the difference between a pre-updating file as one version of data and a post-updating file as another version of the data, transferring the differential data to another location through a communication unit, and restoring the post-updating file based on the stored pre-updating file at the transfer destination and the differential data,
the differential data producing device, comprising:
a matching data string search unit which searches the pre-updating file for a data string which is matched with a data string in the post-updating file;
a Move/Add determining unit which determines whether to produce Move data or Add data as the differential data based on the search result, the Move data indicating a Move instruction to move and copy a matching data string from a part or all of the pre-updating file to the post-updating file, and the Add data indicating an Add instruction to add and copy a data string in the differential data to the post-updating file;
a Move data output unit which outputs the Move data; and
an Add data output unit which outputs the Add data,
wherein the differential data has zero, one, or a plurality of pieces of the Move data and zero, one, or a plurality, of pieces of the Add data.

6. The differential data producing device according to claim 5, wherein the Move data output unit indudes a separator output unit for outputting a separator made of particular data indicating the beginning of the Move data; and
wherein data expressing the Move instruction is outputted after outputting of the separator.

7. The differential data producing device according to claim 5, wherein when prescribed data used as the separator exists in the Add data, the Add data output unit outputs prescribed data indicating that the prescribed data is not a separator following the data.

8. The differential data producing device according to claim 5, wherein the Move/Add determining unit determines that the Move data unit outputs the matching data string as the Move data when the length of the matching data string is equal to or greater than a prescribed threshold and that the Add data output unit outputs the matching data strings as the Add data when the length of the matching data string is smaller than the prescribed threshold.

9. The differential data producing device according to claim 8, wherein when the differential data producing device is used for a data updating system that transfers a program and data in a computing system using a 32-bit CPU, the threshold in the Move/Add determining unit is set to five bytes.

10. The differential data producing device according to daim 8, wherein when the differential data between the pre-updating file as one version and the post-updating file as another version is produced, the differential data is produced by using a plurality of different thresholds as the threshold in the Move/Add determining unit; and
wherein the differential data having a minimum size is employed.

11. The differential data producing device according to claim 5, wherein the Move/Add determining unit compares the sizes of differential data between when the matching data string is expressed by the Move data and when the data string is expressed by the Add data, and determines that the data having a smaller size is to be selected.

12. The differential data producing device according to claim 5, wherein the Move data output unit provides a data length continuation flag made of one or more bits in the beginning byte or word of the Move data;
wherein the length of the data string to be copied from the pre-updating file is expressed only by information in the byte or word when the data length continuation flag takes a prescribed first state; and
wherein data length informatlon is outputted when the data length continuation flag takes a prescribed second state different from the first state, the data length information indicating that information expressing the length of the data string continues in one or more bytes or words in or after the byte or word is continued.

13. The differential data producing device according to claim 12, wherein the Move data output unit provides a data length continuation flag made of one or more bits in or after the second byte or word of the Move data;
wherein the length of the data string to be copied from the pre-updating file is expressed by information between the beginning byte or word of the Move data and the byte or word, when the data length continuation flag takes the prescribed first state; and
wherein data length information is outputted when the data length continuation flag takes the prescribed second state different from the first state, the data length information indicating that information expressing the length of the data string in one or more bytes or words in and after the byte or word is continued.

14. The differential data producing device according to claim 5, wherein the Move data output unit outputs address information that uses an absolute address in at least one of the pre-updating file and the post-updating file as Information indicating a location for moving a data string to be copied from the pre-updating file to the post-updating file in the Move data.

15. The differential data producing device according to claim 5, wherein the Move data output unit outputs address information that uses a relative address indicating the difference between the location of a data string in the pre-updating file and the location of the data string in the post-updating file as information indicating a location for moving the data string to be copied from the pre-updating file to the post-updating file.

16. The differential data producing device according to claim 5, wherein the Move data output unit and the Add data output unit produce and output the Move data and the Add data based on the order of data strings in the post-updating file; and
wherein the Move data output unit outputs address information that uses a relative address indicating the difference between the beginning location of a data string in the pre-updating file and the size of restored data in the post-updating file as information indicating a location for moving the data string to be copied from the pre-updating file to the post-updating file.

17. The differential data producing device according to claim 15 or 16,
wherein the Move data output unit outputs an address continuation flag made of one or more bits in the beginning byte or word of the data string in the address information by the relative address in the Move data;
wherein the Move data output unit expresses the relative address only by the information in the byte or word when the address continuation flag takes a prescribed first state; and
wherein the Move data output unit outputs address information indicating that information that expresses the relative address continues in one or more bytes or words in and after the byte or word when the address continuation flag takes a prescribed second state different from the first state.

18. The differential data producing device according to claim 17, wherein the Move data output unit provides an address continuation flag made of one or more bits in and after the second byte or word in the data string in the address information by the relative address in the Move data; and
wherein the Move data output unit outputs address information indicating that information that expresses the relative address by information between the beginning byte or word of the data string in the address information and the byte or word when the address continuation flag takes the prescribed first state, and that expresses the relative address in one or more bytes or words in and after the byte or word when the address continuation flag takes the prescribed second state different from the first state.

19. The differential data producing device according to claim 15 or 16,
wherein when the same relative address exists in a plurality of pieces of Move data in address information in the Move data, the Move data output unit expresses the one or more relative addresses by one or more bits in the beginning byte of word of the Move data.

20. The differential data producing device according to claim 5, wherein the Move data output unit outputs address information that uses a relative address indicating the difference between the location of the data string in the pre-updatlng file and the location of the data string in the post-updating file or the difference between the beginning location of the data string in the pre-updating file and the size of restored data in the post-updating file as information representing the location of a data string to be copied from the pre-updating file to the post-updating file in the Move data;
wherein an address change flag made of one or more bits is provided in the Move data;
wherein the Move data output unit outputs address information by the relative address following data length information indicating the length of the data string when the address change flag takes a prescribed first state; and
wherein the Move data output unit omits information expressing the relative address as the relative address in the previous Move data and the relative address in the present Move data are the same when the address change flag takes a prescribed second state different from the first state.

21. The differential data producing device according to any one of claims 15, 16, and 20, wherein the Move data output unit expresses the relative address in the address information in the Move data by the amount of change from the relative address in the previous Move data.

22. A differential data producing program enabling a computer to implement the functions of the unit in the differential data producing device in the data updating system according to any one of claims 5 to 21.

23. A post-updating file restoring device in a data updating system receiving differential data representing the difference between a pre-updating file as one version of data and a post-updating file as another version of the data and restoring the post-updating file based on the pre-updating file stored in the post-updating file restoring device and the differential data,
the post-updating file restoring device, comprising:
a Move/Add determining unit which determines whether the differential data is Move data representing a Move instruction to move and copy a matching data string from a part or all of the pre-updating file to the post-updating file or Add data representing an Add instruction to add and copy a data string in the differential data to the post-updating file;
a Move data restoring unit which outputs a data string corresponding to the Move data; and
an Add data restoring unit which outputs a data string corresponding to the Add data,
wherein the post-updating file is produced from the differential data.

24. The post-updating file restoring device according to claim 23, wherein in the differential data, the Move/Add determining unit discriminates data expressing a Move instruction and provided after a separator made of particular data as the Move data and data expressing an Add instruction provided between the beginning of the differential data or the end of the previous Move data and the presence of the separator as the Add data.

25. The post-updating file restoring device according to claim 24, wherein when the separator is present in a data string and data following the separator is particular data in the differential data, the Move/Add determining unit determines the separator as data present in the Add data, the data being used as a separator instead of the separator.

26. The post-updating file restoring device according to claim 23, wherein the Move data restoring unit determines data length information provided in the Move data to determine the length of a data string to be copied from the pre-updating file to the post-updating file, and detects a data continuation flag made of one or more bits in the beginning byte or word of the Move data;
wherein when the data length continuation flag takes a prescribed first state, the data Move data restoring unit determines the data length information from information in the byte or word, and determines the length of the data string to be copied; and
wherein when the length of the data length continuation flag takes a prescribed second state different from the first state, the Move data restoring unit determines that the data length information continues in one or more bytes or words in and after the byte or word.

27. The post-updating file restoring device according to claim 26, wherein the Move data restoring unit detects a data length continuation flag made of one or more bits in and after the second byte or word of the Move data;
wherein when the data length continuation flag takes the prescribed first state, the Move data restoring unit determines data length information from Information between the beginning byte or word of the Move data and the byte or word; and
wherein when the data length continuation flag takes the prescribed second state different from the first state, the Move data restoring unit determines that the data length information continues in one or more bytes or words in and after the byte or word.

28. The post-updating file restoring device according to claim 23, wherein the Move data restoring unit determines address information provided in the Move data, and determines a location for moving a data string is to be copied from the pre-updating file to the post-updating file; and
wherein the Move data restoring unit determines address information expressed by a relative address representing the difference between the location of the data string in the pre-updating file and the location of the data string in the post-updating file or the difference between the beginning location of the data string in the pre-updating file and the size of restored data in the post-updating file.

29. The post-updating file restoring device according to claim 28, wherein the Move data restoring unit detects an address continuation flag made of one or more bits in the beginning byte or word in the data string in address information by the relative address in the Move data;
wherein the Move data restoring unit determines the address information of the relative address from information in the byte or word to determine the location of the data string to be copied when the address continuation flag takes the prescribed first state; and
wherein the Move data restoring unit determines that the address information continues in one or more bytes or words in and after the byte or word when the address continuation flag takes the prescribed second state different from the first state.

30. The post-updating file restoring device according to claim 29, wherein the Move data restoring unit detects an address continuation flag made of one or more bits in and after the second byte or word in the data string in the address information by the relative address in the Move data;
wherein the Move data restoring unit determines the address information of the relative address from the beginning byte or word of the data string in the address information or information in the byte or word to determine the location of the data string to be copied when the address continuation flag takes the prescribed first state; and
wherein the Move data restoring unit determines that the address information continues in one or more bytes or words in and after the byte or word when the continuation flag takes the prescribed second state different from the first state.

31. The post-updating file restoring device according to claim 28, wherein the Move data restoring unit determines address information expressed by one or more bits in the Move data, and determines the location of the data string to be copied, one or more relative address values corresponding to the address information being the same relative address values.

32. The post-updating file restoring device according to claim 28, wherein the Move data restoring unit detects an address change flag made of one or more bits in the Move data, and determines address information by the relative address provided following data length information representing the length of the data string to be copied, when the address change flag takes a prescribed first state; and
wherein the Move data restoring unit determines the location of the data string to be copied using the same relative address as the relative address in the previous Move data when the address change flag takes a prescribed second state different from the first state.

33. A post-updating file restoring program for enabling a computer to implement the functions of the units in the post updating file restoring device in the data updating system according to any one of claims 23 to 32.
